## Europäisches Patentamt
## European Patent Office
## Office européen des brevets

(19)

(11) Veröffentlichungsnummer: **0 108 038**
A1

(12) # EUROPÄISCHE PATENTANMELDUNG

(21) Anmeldenummer: 83810437.0

(22) Anmeldetag: 28.09.83

(51) Int. Cl.³: **A 23 F 5/20**

(30) Priorität: 01.10.82 CH 5815/82

(43) Veröffentlichungstag der Anmeldung:
09.05.84 Patentblatt 84/19

(84) Benannte Vertragsstaaten:
AT BE CH DE FR GB IT LI LU NL SE

(71) Anmelder: Haco AG

CH-3073 Gümligen(CH)

(72) Erfinder: Baumann, Daniel
Gerechtigkeitsgasse 4
CH-3011 Bern(CH)

(72) Erfinder: Brandenberger, Erich
Eigerweg 3
CH-3073 Gümligen(CH)

(72) Erfinder: Gal, Stefan
Beethovenstrasse 11
CH-3073 Gümligen(CH)

(74) Vertreter: Becher, Pauline, Dr. et al,
A. Braun, Braun, Héritier, Eschmann AG Holbeinstrasse
36-38
CH-4051 Basel(CH)

(54) Verfahren zur Rückführung von praktisch coffeinfreien Bohnenkaffee-Extraktstoffen in mit einer wässrigen Flüssigkeit extrahierte und dadurch entcoffeinierte Kaffeebohnen.

(57) Praktisch coffeinfreie Bohnenkafee-Extraktstoffe werden in mit einer wässrigen Flüssigkeit extrahierte und dadurch entcoffeinierte Kaffeebohnen zurückgeführt. Die aufgequollenen extrahierten Bohnen, werden ohne Zwischentrocknung direkt mit einem aufkonzentrierten, entcoffeinierten wässrigen Kaffee-Extrakt in Berührung gebracht. Die Menge dieses Kaffee-Extraktes ist grösser als die Menge, die die extrahierten Bohnen aufzunehmen vermögen. Dadurch wird der Extratgehalt der Bohnen praktisch ohne Erhöhung ihres Coffeingehaltes nahezu auf den Extraktgehalt von nicht extrahierten Kaffeebohnen gebracht. Der überschüssige Kaffee-Extrakt wird von den Kaffeebohnen abgetrennt. Er kann wieder in den Prozess zurückgeführt werden.

EP 0 108 038 A1

0108038

Verfahren zur Rückführung von praktisch coffeinfreien Bohnenkaffee-Extraktstoffen in mit einer wässrigen Flüssigkeit extrahierte und dadurch entcoffeinierte Kaffeebohnen

Die Entcoffeinierung von Kaffeebohnen mit Wasser oder einem wässrigen Extrakt von grünem Kaffee ist seit langem bekannt (vgl. die FR-PS Nr. 779.451, veröffentlicht am 5. April 1935, und die US-PS Nr. 2.309.092, patentiert am 26. Januar 1943). Trotzdem hat sich in den vergangenen Jahrzehnten die Extraktion des Coffeins mit organischen Lösungsmitteln, in erster Linie Methylenchlorid, durchgesetzt. Neuerdings hat die Entcoffeinierung mit wässrigen Flüssigkeiten jedoch wieder an Bedeutung gewonnen, weil in letzter Zeit toxikologische und ökologische Bedenken gegen die Verwendung von organischen Lösungsmitteln aufgekommen sind. Aus diesem Grunde wurden an dem Verfahren zur Entcoffeinierung mit wässrigen Flüssigkeiten Verbesserungen vorgenommen (vgl. die EP-A1-0.008.398 der Coffex AG, veröffentlicht am 5. März 1980, und die EP-A1-0.040.712 der Société des Produits Nestlé S.A., veröffentlicht am 2. Dezember 1981), welche die Verminderung der Extraktionsverluste durch Erhöhung der Selektivität der zur Adsorption des Coffeins benutzten Aktivkohle zum Gegenstand haben.

Im wesentlichen haben sich zwei Verfahren zur Entcoffeinierung von Kaffeebohnen mit wässrigen Flüssigkeiten durchgesetzt, die im folgenden kurz beschrieben werden:

Das Verfahren der General Foods Corporation (US-PS Nr. 2.309.092) benutzt einen wässrigen Extrakt von grünen Kaffeebohnen, der in Bezug auf Coffein ungesättigt ist, in Bezug auf die von Coffein verschiedenen Extraktstoffe der Kaffeebohnen aber quasi-gesättigt ist, als Extraktionslösung. Dieser Extrakt wird über frische Kaffeebohnen geleitet, wobei infolge der angegebenen Sättigungsverhältnisse im wesentlichen nur Coffein aus den Kaffeebohnen herausgelöst wird. Aus der so erhältenen wässrigen Lösung, in der das Coffein angereichert ist, kann es mit Hilfe von seit langem bekannten Verfahren, wie durch Adsorption an Aktivkohle oder Adsorptionsharze, oder durch Flüssig-Flüssig-Extraktion mittels eines organischen Lösungsmittels usw., entfernt werden. Ein Nachteil dieses Verfahrens ist, dass die wässrige Extraktionslösung ständig bei hoher Temperatur gehalten werden muss, und zwar einerseits, damit sie nicht periodisch abgekühlt und wieder auf die Extraktionstemperatur erwärmt werden muss, und andererseits, damit sich keine Mikroorganismen entwickeln können. Dadurch treten nach mehrmaligem Gebrauch in der wässrigen Extraktionslösung sowohl farbliche als auch geschmackliche Veränderungen auf. Die mit Hilfe solcher mehrfach verwendeter Lösungen entcoffeinierten Kaffeebohnen haben infolgedessen gewisse geschmackliche und farbliche Mängel.

Das andere Verfahren benutzt für die Extraktion des Coffeins reines Wasser. Dadurch werden aber aus den Kaffeebohnen neben dem Coffein auch andere Extraktstoffe herausgelöst, die den Kaffeebohnen anschliessend wieder zugeführt werden müssen. Dies ist in der Schweiz schon im Hinblick auf die Schweizerische Verordnung über den Verkehr mit Lebensmitteln und Gebrauchsgegenständen, Liste der zulässigen Lösungsmittel für die Entcoffeinierung von Kaffee vom 1. Juli 1981, Absatz II, Alinea 3 erforderlich. Zu diesem Zweck werden die Bohnen nach erfolgter Extraktion teilweise getrocknet; die Extraktionslösung wird in der oben angegebenen Weise entcoffeiniert und dann aufkonzentriert und danach mit den extrahierten, teilweise getrockneten Kaffeebohnen zusammengeführt. Durch die Zwischentrocknung werden die Kaffeebohnen jedoch einer zusätzlichen thermischen Belastung ausgesetzt, was zu einer Beeinträchtigung ihres Geschmackes führt. Zudem ergibt sich beim Aufsaugen der relativ konzentrierten Extraktlösung eine Anreicherung der Extraktstoffe an der Oberfläche der Kaffeebohnen, was die Röstung erschwert und auch der Tassenqualität abträglich ist.

Gegenstand der Erfindung ist ein Verfahren zur Rückführung von praktisch coffeinfreien Bohnenkaffee-Extraktstoffen in mit einer wässrigen Flüssigkeit extrahierte und dadurch entcoffeinierte Kaffeebohnen, welches nicht die Nachteile der oben beschriebenen beiden Verfahren hat, infolge einer technisch neuartigen Prozessführung aber deren Vorteile in sich vereinigt. Es wurde nämlich überraschenderweise festgestellt, dass die Rückdiffusion der Extraktstoffe in die extrahierten Kaffeebohnen unter ganz bestimmten Umständen auch ohne Vortrocknung der Bohnen möglich ist, solange der wässrige Extrakt im Ueberschuss über die Menge, die die extrahierten Bohnen aufzunehmen vermögen, vorhanden ist. Im Verlaufe des Prozesses stellt sich unter diesen Umständen ein Gleichgewicht zwischen dem Extraktstoffgehalt der Kaffeebohnen und dem Extraktstoffgehalt des die Bohnen umgebenden coffeinfreien Extraktes ein. Dadurch ist es möglich, nach der Entcoffeinierung den natürlichen Extraktgehalt der Kaffeebohnen nahezu wiederherzustellen, und infolgedessen ist es auch möglich, durch eine normale Röstung der behandelten Kaffeebohnen eine optimale Tassenqualität zu erreichen.

Das erfindungsgemässe Verfahren ist somit dadurch gekennzeichnet, dass man die aufgequollenen extrahierten Bohnen ohne Zwischentrocknung direkt mit einer Menge eines aufkonzentrierten, entcoffeinierten wässrigen Kaffee-Extraktes in Berührung bringt, die grösser ist als die Menge, die die extrahierten Bohnen aufzunehmen vermögen, wodurch der Extraktgehalt der Bohnen praktisch ohne Erhöhung ihres Coffeingehaltes nahezu auf den Extraktgehalt von nicht extrahierten Kaffeebohnen gebracht wird, und dass man den überschüssigen Kaffee-Extrakt von den Kaffeebohnen abtrennt.

Ueberraschend ist ferner die Tatsache, dass auch bei erneuter Verwendung des überschüssigen Kaffee-Extraktes bei diesem Verfahren keine Qualitätsverminderung der Kaffeebohnen eintritt, weil durch die Vermischung des überschüssigen, an Extraktstoffen ärmeren Kaffee-Extraktes mit dem bei der Extraktion der nachfolgenden Charge von Kaffeebohnen mit Wasser erhaltenen frischen entcoffeinierten Kaffee-Extrakt eine ständige Erneuerung der Extraktstoffe erfolgt. Es stellen sich nämlich Gleichgewichtszustände zwischen den Extraktstoffen in dem frischen entcoffeinierten Kaffee-Extrakt, den Extraktstoffen in dem im Kreislauf zirkulierenden überschüssigen Kaffee-Extrakt und den Extraktstoffen in den entcoffeinierten Kaffeebohnen ein, so dass die Verweilzeit der Extraktstoffe in der wässrigen Phase verkürzt wird. Dieser Umstand führt zu einer zusätzlichen Verbesserung der Tassenqualität gegenüber den vorbekannten Verfahren.

Ein weiterer Vorteil des erfindungsgemässen Verfahrens besteht darin, dass man immer mit einem Ueberschuss an entcoffeiniertem Kaffee-Extrakt über die Menge, die von den extrahierten Kaffeebohnen aufgenommen werden kann, arbeitet, so dass die Bohnen in jedem Falle genügend Extraktstoffe enthalten und den diesbezüglichen Vorschriften in der Schweiz (22 Gew.% Extraktstoffe) entsprechen. Dies ist bei dem oben als zweites bekanntes Verfahren beschriebenen einfachen Rückführverfahren nicht ohne weiteres gewährleistet, weil die Verluste von nicht aus Coffein bestehenden Extraktstoffen, die bei der Entcoffeinierung der wässrigen Extraktionslösung unvermeidlich eintreten, nicht ersetzt werden, so dass diese Extraktstoffe in den behandelten Kaffeebohnen fehlen. Bei dem Verfahren nach der EP-A1-0.008.398 werden daher zur Entcoffeinierung des wässrigen Extraktes Adsorptionsmittel verwendet, die mit von Coffein verschiedenen Kaffee-Extraktstoffen oder Ersatzstoffen entsprechender Molekülstruktur und -grösse beladen sind. Im Beispiel dieses Dokumentes wird eine mit Rohrzucker und Ameisensäure beladene Aktivkohle verwendet. Im bekannten Verfahren nach der EP-A1-0.040.712 wird eine Aktivkohle eingesetzt, die zwecks Neutralisation mit Salzsäure vorbehandelt wird. Diese Massnahmen sind beim vorliegenden Verfahren unnötig.

Beim erfindungsgemässen Verfahren wird der überschüssige Kaffee-Extrakt vorzugsweise in das Verfahren zurückgeführt, indem man ihn mit dem bei der Extraktion der nachfolgenden Charge von Kaffeebohnen erhaltenen frischen entcoffeinierten Kaffee-Extrakt mischt und die Mischung aufkonzentriert.

Das Gewichtsverhältnis von extrahierten Kaffeebohnen zu aufkonzentriertem Kaffee-Extrakt liegt in der Regel im Bereich von 1:1 bis 1:10, vorzugsweise im Bereich von 1:1 bis 1:3, und beträgt insbesondere ca. 1:2.

Der entcoffeinierte Kaffee-Extrakt hat normalerweise einen Trockensubstanzgehalt von 15 bis 50 Gew.%, vorzugsweise von 20 bis 40 Gew.%, insbesondere von ca. 30 Gew.%.

Man kann auch so vorgehen, dass man den entcoffeinierten Kaffee-Extrakt im Kreislauf über die aufgequollenen extrahierten, nicht zwischengetrockneten Bohnen und durch einen Vakuumeindampfer leitet, so dass sich die Konzentration des Extraktes kontinuierlich erhöht, bis der gewünschte Endwert erreicht ist.

Die extrahierten Bohnen und der entcoffeinierte Kaffee-Extrakt können bei Temperaturen von 40 bis 90 °C miteinander in Berührung gebracht werden. Bei 80 ±5 °C stellt sich das Diffusionsgleichgewicht nach 3 bis 4 Stunden ein, bei 40 °C nach einer entsprechend längeren Zeit. Man arbeitet vorzugsweise bei Normaldruck, doch kann man auch Drücke von 2 bis 3 bar anwenden.

## Beispiel 1

A)    60 kg Rohkaffee mit einem Wassergehalt von 8 Gew.%, einem Coffeingehalt von 1,0 Gew.% und einem Extraktgehalt von 28 Gew.% sowie 210 Liter Prozesswasser werden in einen Extraktor von 250 Liter Inhalt gegeben. Die Bohnen werden während ca. 30 Minuten bei einer Temperatur von 80 °C gequollen. Danach wird die Extraktionslösung über eine Pumpe und ein Filter abwechselnd durch Adsorptionskolonnen, die unbehandelte Aktivkohle enthalten, und durch den Extraktor gefördert. Nach 9 Stunden enthalten die Kaffeebohnen nur noch 0,025 Gew.% oder weniger Coffein und der wässrige Extrakt nur noch 0,010 Gew.% oder weniger Coffein. Die Extraktion wird beendet und der entcoffeinierte Extrakt, der einen Extraktgehalt von 4,5 bis 5,0 Gew.% (Refraktometerwert 5,5 %) hat, von den Kaffee-

- 7 -

bohnen abgepumpt und mit dem überschüssigen Extrakt aus einem vorhergehenden Ansatz (100 Liter, Refraktometerwert 25 %) vereinigt.

B) Die vereinigten Lösungen, einschliesslich des Wassers aus den Leitungen, den Adsorptionskolonnen usw., werden unter Vakuum auf einen Extraktgehalt von ca. 30 Gew.% (Refraktometerwert 35 %) eingeengt. Die so aufkonzentrierte Lösung (ca. 125 Liter) wird in ein Zwischenlagergefäss gefördert, das so ausgestaltet ist, dass eine längere Aufbewahrungsdauer der konzentrierten Lösung möglich ist. 100 bis 120 Liter dieses aufkonzentrierten Extraktes werden nun zu den nicht zwischengetrockneten entcoffeinierten Kaffeebohnen gegeben und bei 80 °C 4 Stunden lang damit vermischt. Nach Erreichen des Diffusionsgleichgewichtes wird der überschüssige Extrakt (100 Liter, Refraktometerwert 25 %) wieder abgepumpt und in einem Tank bei 70 bis 80 °C für die weitere Verwendung gelagert. Die Kaffeebohnen werden mit wenig Wasser von dem anhaftenden Extrakt befreit und in der üblichen Weise mit Heissluft getrocknet. Sie haben einen Wassergehalt von 7 Gew.%, einen Coffeingehalt von 0,06 Gew.% und einen Extraktgehalt von 23 Gew.%.

Beispiel 2

A) Man verfährt wie in Beispiel 1 unter A) beschrieben.

B) Die vereinigten Lösungen werden mit dem Wasser aus den Leitungen, den Adsorptionskolonnen usw. in ein Gefäss zusammengeführt und gut vermischt, wobei 420 bis 450 Liter einer Lösung mit einem Extraktgehalt von ca. 15 Gew.% (Refraktionswert 12 bis 15 %) erhalten werden. Diese Lösung wird im Kreislauf über die nicht zwischengetrockneten, entcoffeinierten Bohnen und durch einen Vakuumeindampfer geleitet, so dass die Aufnahme der Extraktstoffe durch die Bohnen gleichzeitig mit der Aufkonzentrierung des Extraktes erfolgt. Nach ca. 3 Stunden haben die Bohnen gleichmässig die gewünschte Extraktstoffmenge aufgenommen und ist der Extraktgehalt des Extraktes auf ca. 30 Gew.% angehoben. Der Prozess wird nun beendet und der überschüssige Extrakt (100 Liter mit einem Refraktometerwert von ca. 25 %) abgepumpt und in einem Tank bei 70 bis 80 °C für die weitere Verwendung gelagert. Die Kaffeebohnen werden mit wenig Wasser von dem anhaftenden Extrakt befreit und in der üblichen Weise mit Heissluft getrocknet. Sie haben einen Wassergehalt von 7 Gew.%, einen Coffeingehalt von 0,05 Gew.% und einen Extraktgehalt von 24 Gew.%.

Statt Aktivkohle kann man in den Beispielen mit ähnlichen Ergebnissen auch an sich bekannte Adsorptionsharze verwenden.

P a t e n t a n s p r ü c h e

1. Verfahren zur Rückführung von praktisch coffeinfreien Bohnenkaffee-Extraktstoffen in mit einer wässrigen Flüssigkeit extrahierte und dadurch entcoffeinierte Kaffeebohnen, dadurch gekennzeichnet, dass man die aufgequollenen extrahierten Bohnen ohne Zwischentrocknung direkt mit einer Menge eines aufkonzentrierten, entcoffeinierten wässrigen Kaffee-Extraktes in Berührung bringt, die grösser ist als die Menge, die die extrahierten Bohnen aufzunehmen vermögen, wodurch der Extraktgehalt der Bohnen praktisch ohne Erhöhung ihres Coffeingehaltes nahezu auf den Extraktgehalt von nicht extrahierten Kaffeebohnen gebracht wird, und dass man den überschüssigen Kaffee-Extrakt von den Kaffeebohnen abtrennt.

2. Verfahren nach Anspruch 1, dadurch gekennzeichnet, dass man den überschüssigen Kaffee-Extrakt wieder in das Verfahren zurückführt.

3. Verfahren nach Anspruch 1 oder 2, dadurch gekennzeichnet, dass man ein Gewichtsverhältnis von extrahierten Kaffeebohnen zu aufkonzentriertem Kaffee-Extrakt im Bereich von 1:1 bis 1:10, vorzugsweise von 1:1 bis 1:3, insbesondere von ca. 1:2, anwendet.

4. Verfahren nach einem der Ansprüche 1 bis 3, dadurch gekennzeichnet, dass man einen entcoffeinierten Kaffee-Extrakt mit einem Trockensubstanzgehalt von 15 bis 50 Gew.%, vorzugsweise von 20 bis 40 Gew.%, insbesondere von ca. 30 Gew.%, verwendet.

5. Verfahren nach einem der Ansprüche 1 bis 4, dadurch gekennzeichnet, dass man den entcoffeinierten Kaffee-Extrakt im Kreislauf über die aufgequollenen extrahierten, nicht zwischengetrockneten Bohnen und durch einen Vakuumeindampfer leitet, so dass sich die Konzentration des Extraktes kontinuierlich erhöht, bis der gewünschte Endwert erreicht ist.

6. Verfahren nach einem der Ansprüche 1 bis 5, dadurch gekennzeichnet, dass man die extrahierten Bohnen und den entcoffeinierten Kaffee-Extrakt bei einer Temperatur von 40 bis 90 °C, vorzugsweise bei 80 ± 5 °C, in Berührung bringt.

7. Verfahren nach einem der Ansprüche 1 bis 6, dadurch gekennzeichnet, dass man die extrahierten Bohnen und den entcoffeinierten Kaffee-Extrakt bei Normaldruck oder unter einem Druck von 2 bis 3 bar in Berührung bringt.

E